# EUROPEAN PATENT SPECIFICATION

(11) **EP 0 414 360 B1**
(45) Date of publication and mention of the grant of the patent: **09.11.1994**
(21) Application number: 90307491.2
(22) Date of filing: 09.07.1990
(51) Int. Cl.: F16D 3/14, F16D 13/64

(54) **Damper disc**
Dämpfungsscheibe
Disque d'amortissement

(30) Priority: 21.07.1989 GB 8916766; 23.03.1990 IT 1978690
(43) Date of publication of application: 27.02.1991
(73) Proprietor: AUTOMOTIVE PRODUCTS PLC, Leamington Spa Warwickshire CV31 3ER (GB); AUTOMOTIVE PRODUCTS (ITALIA) S.r.l., 20124 Milano (IT)
(72) Inventor: Curtis, Anthony John, Leamington Spa, CV31 3ER (GB); Cucinotta, Luigi, I-20020 Arese, Milano (IT); Caracini, Pietro, I-62010 Treia, Macerata (IT)
(74) Representative: Stanley, Michael Gordon

(56) References cited:
- GB-A- 2 205 383
- US-A- 4 024 938
- US-A- 4 562 913

## Description

This invention relates to friction clutch driven plates, and in particular, but not exclusively, to friction clutch driven plates for use on vehicles.

In a typical motor vehicle the engine is connected to the vehicle gearbox via a friction clutch which includes a flywheel and pressure plate connected to the engine, and between which is sandwiched a driven plate which is connected to the gearbox.

A friction clutch driven plate typically comprises a hub which is splined onto the gearbox input shaft, a co-axial friction facing carrier plate mounted on the hub and capable of limited angular rotation about the hub, and springs housed in aligned apertures in a flange connected to the hub and the carrier plate, to act between the hub and carrier plate to restrain said angular rotation. The facing carrier plate is connected to the vehicle flywheel through the friction facings.

In some vehicles when the engine is idling and there is no torque load passing through the clutch driven plate the irregular impulses from the vehicle engine can be transmitted to the gearbox and cause gearbox idle chatter.

Solutions to overcome this problem have involved the use of multi-stage spring damping in which the movement between the friction facing carrier plate and the hub flange is dampened by main or second stage damping springs and the hub flange is free to rotate through a limited angular movement relative to the hub drive and is restrained in this movement by a very low rate first stage torsional damping spring or springs. The hub flange can oscillate around the hub when the vehicle is idling with only the first stage damping springs operating to suppress any transmission of vibrations to the gearbox. Such driven plates are disclosed in GB-A-2205383 and US-A-4562913.

These very low load impulses passing through the driven plate can also be dampened by use of a low rate friction damping means which is operated only in conjunction with the first stage damping.

Clutch driven plates which include idling dampers tend to have very complicated structures and are difficult to assemble. Further these driven plates are typically bulky around the hub so that the driven plate is difficult to incorporate into a particular envelope.

The present invention provides a method of manufacture of a friction clutch driven plate having a friction facing carrier rotatably mounted on a hub and having an initial resilient torsion damping means operable over a first period of rotation of the carrier around the hub, and a main torsion damping means operable over a further second period of said rotation, characterised in that the initial torsion damping means is assembled as part of a pre-built first stage damping unit which forms a rotary coupling in its own right, and can be tested and adjusted prior to assembly of the driven plate.

Also there is provided a friction clutch driven plate manufactured by the above method which comprises a hub an annular hub flange mounted on the hub and capable of limited angular movement about the hub , and a friction facing carrier also mounted on the hub and capable of of limited angular movement relative to both the hub and hub flange, a main torsion damping means acting between the facing carrier and the hub flange to restrain said relative movement therebetween , and an initial resilient torsion damping means which acts between the hub flange and the hub to restrain angular movement therebetween during a first period of relative rotation of the carrier around the hub, wherein the initial torsion damping means is housed in the pre-built first stage damping unit in which said initial damping means acts between a first coaxial annular means adapted to engage rotationally fast with the hub flange, and a second coaxial annular means adapted to engage rotationally fast with the hub, said unit forming the independant rotary coupling.

Preferably, the second coaxial annular means comprises a flange means adapted to engage rotationally fast with the hub , and the first coaxial annular means comprises a pair of side plates located one on each side of the flange means and being secured together by pins that pass through apertures in the flange means, said unit including a friction damping device.

Preferably the friction damping device is a variable hysteresis friction damping means operable over said initial period.

The invention will be described by way of example and with reference to the accompanying drawings in which:
FIG 1 is an elevation of a clutch driven plate according to the invention,
FIG 1A is a sectional view showing the hub flange meshing with the hub splines,
FIG 2 is a section on the line II-II of Fig. 1 showing the central portion only ,
Fig 3 is a section similar to FIG 2 showing an alternative construction for the first stage damping unit
FIG 4 is section similar to FIG 2 showing a third constructuion for a first stage damping unit,
Fig. 5 & Fig 6 show side plates from the first stage damping unit,
Fig 7 is a friction plate from the first stage damping unit viewed from one side,
Fig 8 is the centre flange means of the first stage damping unit,
Fig 9 is an elevation of an assembled first stage damping unit with one side plate removed to show the assembly,
Fig 10 is a graph of torsion load versus angular displacement for a driven plate according to this invention,
FIG 11 is an elevation of yet another friction clutch driven plate according to this invention,
FIG 12 is a section on the line XII-XII of FIG 1,
FIG 13 is a pre-built first stage damping unit as used in Fig. 11,
FIG 14 is a section on the line XIV-XIV of Fig. 13,
FIG 15 is a centre flange means from the first stage damping unit viewed from one side,
FIG 16 is the centre flange means of Fig. 15 viewed from the other side showing the low spots in dark shading,
FIG 17 is a graph of torque versus angular displacement for the driven plate,
FIG 18 is an elevation of a side plate from the first stage damper unit of FIG 13 showing the raised radial ribs,
FIG 19 is a section on the line XIX-XIX of Fig. 18, and FIG 20 is a graph of hysteresis versus angular displacement for the first stage damper unit only.

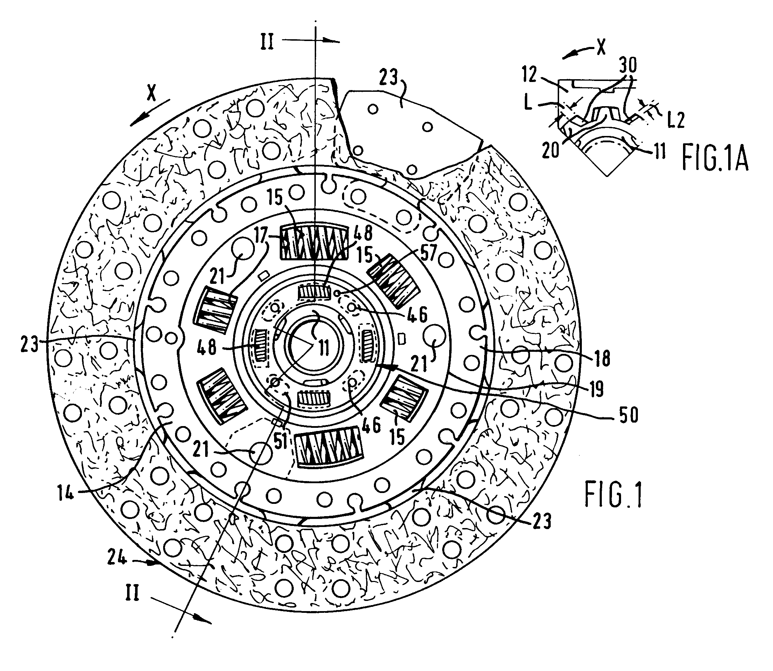

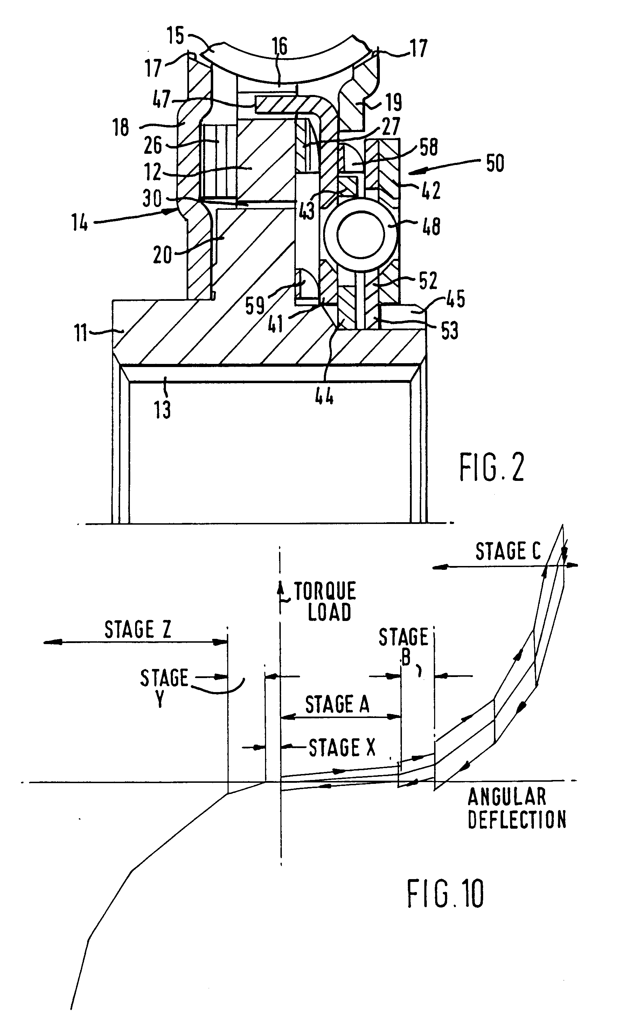

With reference to Figs 1, 1A and Fig. 2 there is illustrated a friction clutch driven plate for a motor vehicle and which comprises a hub 11 having internal splines 13 for connection with a gearbox input shaft and an annular array of circumferentially spaced teeth 20 extending radially outwards on the outer surface of the hub 11. A coaxial annular flange 12 having spaced annular notches 30 in its inner peripheral margin is mounted on the hub 11 concentrically with the teeth 20 so that the teeth 20 loosely engage with the notches 30 allowing the flange 12 limited angular movement about the hub 11. A coaxial friction facing carrier 14 is also mounted on the hub 11 and is capable of limited angular movement relative to both the flange 12 and the hub 11. A set of main torsion damping springs 15 are housed in aligned apertures 16 and 17 in the hub flange 12 and facing carrier 14 respectively, and act to restrain the angular movement therebetween. Although the number of springs illustrated is a preferred six springs, there is no reason why other number of springs cannot be used, for example between four springs and eight springs. The main torsion damping spring provide a resistance to relative rotation of upto 30 da Nm.

The annular facing carrier 14 comprises an annular carrier plate 18 located to one axial side of the flange 12, and an annular retainer plate 19 disposed on the other axial side of the flange 12. The two annular plates 18 and 19 are secured together by three stop pins 21 which pass through co-operating apertures 22 in the outer peripheral margin of the flange 12. The stop pins 21 limit the rotational movement of the facing carrier 14 about the hub 11 and flange 12 by abutment against the radial ends of the apertures 22.

A plurality of segments 23 are arranged in a circular array and are attached to the outer peripheral margin of the carrier plate 18 by any suitable means such as rivets, and a pair of opposed annular friction facings 24 are secured one on each side of the segments 23 by suitable means such as rivets. The segments 23 typically are of spring steel and are shaped to provide resilient axial cushioning between the two friction facings 24.

A friction damping washer 26 is located axially between the hub flange 12 and the carrier plate 19 and is biased against the hub flange by a spring washer 27 located between the hub flange 12 and the side plate 41 of a first stage torsion damping unit to be described in greater detail later.

The main damping springs 15 are housed in the aligned apertures (sometimes referred to as spring windows) 16, in the hub flange 12, and apertures 17 in the carrier plate 18 and retainer plate 19. The spring windows 16 and 17 have circumferential ends that are contactable with the ends of the springs 15 during the rotational movement of the carrier 14 around the hub 11 to compress the springs 15.

The teeth 20 on the hub 11 are engaged in the notches 30 on the inner peripheral margin of flange 12 so that the flange 12 is capable of limited angular rotation around the hub 11. The angular rotation of the flange 12 around the hub 11 being limited in both directions of rotation by abutment of teeth 20 with the circumferential ends of the notches 30.

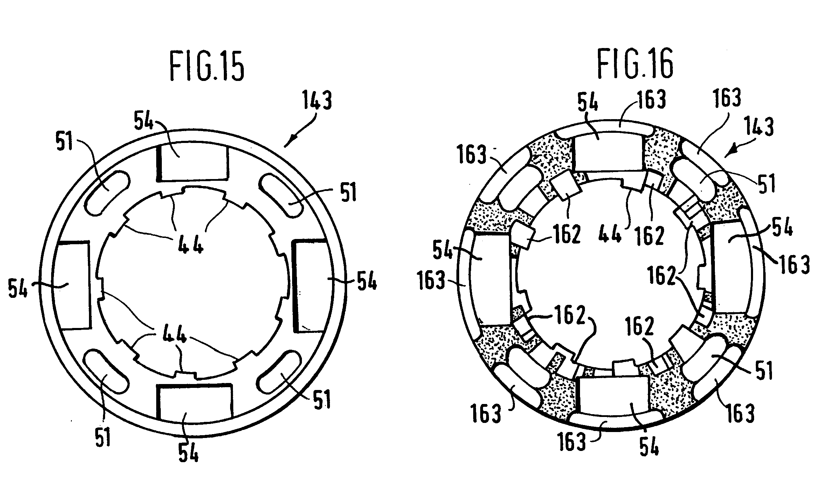

The rotational movement between the flange 12 and the hub 11 is resisted by an initial damping spring sometimes called a first torsion stage damping unit 50, which is more clearly illustrated for one embodiment of the invention in FIG 14.

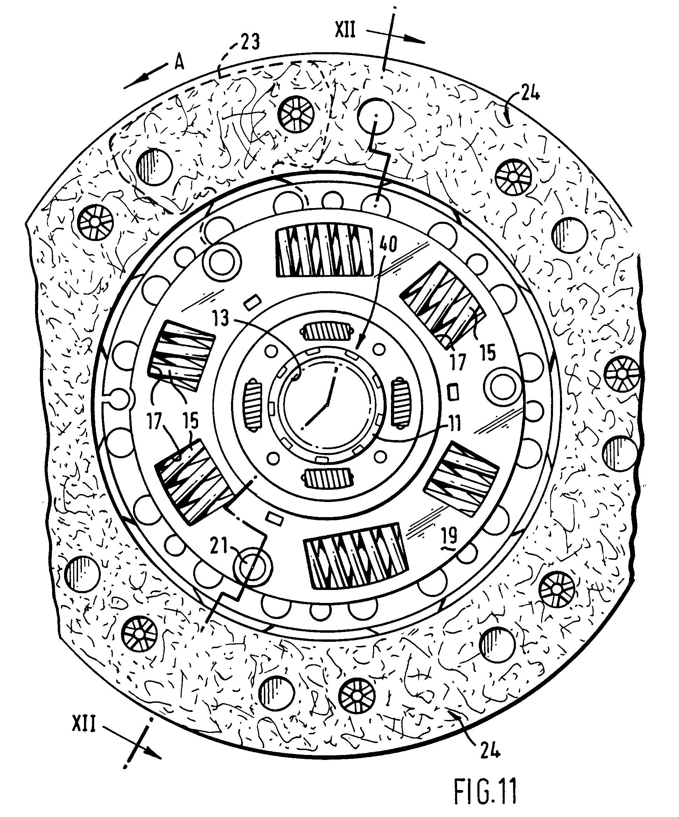

The first stage damping unit 50 is a pre-built sub-assembly which is of a similar construction to the main damping unit of the driven plate and comprises a central flange plate 43 and a pair of side plates 41 & 42 . The flange plate 43 has lugs 44 on its inner periphery for engagement with splines or slots 45 on the outer surface of the hub 11 so that flange plate 43 is rotationally fast with the hub 11 and is free to move axially , this is more easily seen in FIG 8. The side plates 41 and 42 are fastened together by pins 46, preferably four pins, which pass through elongated apertures 51 in the flange plate 43 so that the side plates 41 & 42 are free to rotate relative to the flange plate 43. The side plates 41 and 42 are made rotationally fast to the flange 12 by three axial tabs 47 on the plate 41 that engage in slots on the radially inner edge of the hub flange spring windows 16.

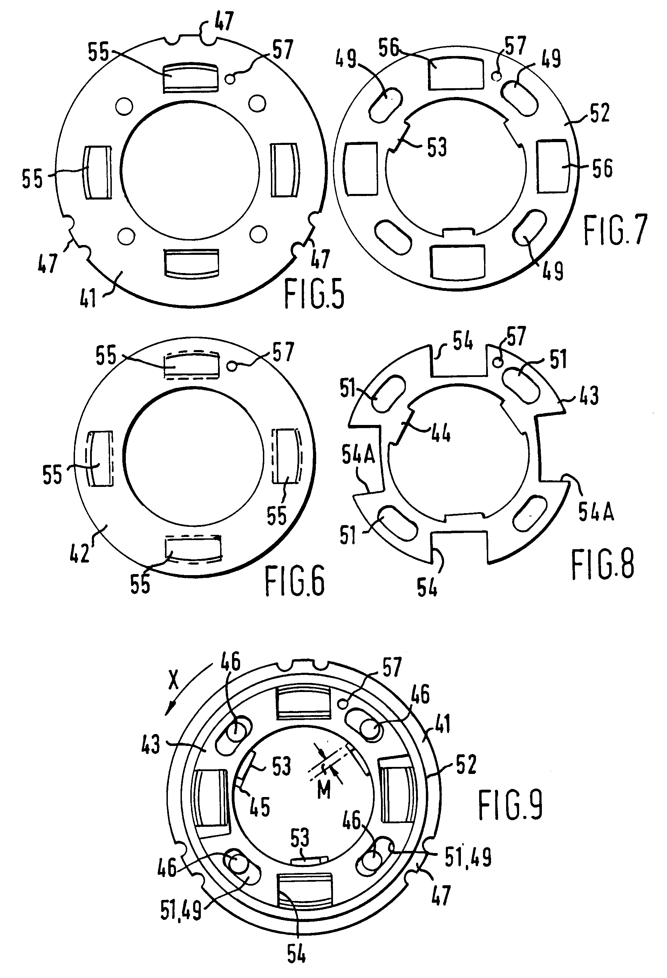

An annular friction plate 52 is located axially between the flange plate 43 and the axially outer side plate 42. The friction plate 52 is shown in Fig 7 and has lugs 53 on its inner periphery that loosely engage the slots 45 on the outer surface of the hub 11. The lugs 53 are a loose fit in the splines to allow the friction plate 52 to move rotationally relative to the flange plate 43. The friction plate 52 has apertures 49 therein to accommodate the pins 46 when the plate 52 rotates relative to the flange plate 43.

Four first stage torsion damping springs 48 are housed in spring apertures or windows 54, 55, 56, in the flange plate 43 and side plates 41 and 42 respectively and friction plate 52 (see Figs 5, 6, 7, and 9). These low rate springs 48 provide a resistance to rotation which is much less than for the main torsion damping springs, and is upto 5 da Nm.

The springs 48 may all have the same spring rating or not as is desired, and can all be brought into operation simultaneously or may be phased in at different dwell angles, again as is desired. In this case at least two springs are an exact fit in the flange plate spring windows 54, side plate windows 55, and friction plate windows 56 to return the hub 11 to an at-rest position relative to the hub flange under no-load conditions (no torque loads on the friction facings) and also to give the required torque versus angular displacement characteristics for the clutch.

The other two springs 48 are arranged to come on in stages by having circumferentially elongated spring windows 54A in the flange plate 43. In this case the second pair of springs come into operation after about 7 degrees of rotational movement. Furthermore as can be seen in Fig 9, when the side plates 41, 42, hub flange 43, and friction plate 52 are assembled, the assembly can be arranged so that the pins 46 are off set relative to the apertures 49, and 51 in the friction plates and flange plate , respectively, reflecting the movement characteristics set by the relationship between the hub teeth 20 and the notches 30 in the flange 12. Similarly the lugs 53 on the inner periphery of the friction plate 52 are illustrated as being off set in the slot 45 on the hub 11 so that in the drive direction of rotation from the 'at rest' condition the friction plate 52 is free to rotate about 7 degrees and in the other direction of the rotation is free to rotate only 1 degree.

An alignment hole 57 is present in each side plate, 41, 42, flange plate 43 and friction plate 52 to aid correct assembly of the components.

A spring washer 58, preferably a wavy washer, is located radially outwardly and concentric with the hub flange 43 to act between the side plate 41 and the friction plate 52 to bias the friction plate 52 into frictional engagement with the other side plate 42. This spring washer is of sufficient strength to generate a hysteresis of between 6-12 Nm. The first stage damping unit 50 is a pre-built sub-assembly which is an independant rotary coupling in its own right and which can be added to the remainder of the driven plate as a pre-tested and pre-tuned unit.

A second spring washer 59 is located coaxially to the hub 11 between the teeth 20 on the outer surface of the hub and the side plate 41 and rubs against the two surfaces. This spring 59 is of sufficent strength to generate a hysteresis of about 0.1 to 3.0 Nm so it can be seen that the spring 58 is as much stronger spring than the spring 59. The damping unit 50 is held on the hub 11 by the retainer plate 19 which as can be seen engages the side plate 41 of the first stage damper unit.

The operation of the driven plate will now be explained also with reference to Fig 1 and Fig 10 and with the hub 11 held stationary and a drive load applied to the friction facings 24, the facing carrier 14 is moved anti-clockwise as shown by arrow X in Fig 1. Since carrier 14 and flange 12 are held rotationaly fast by the main torsion damping springs 15, the flange 12 will initially move with the carrier 14 relative to the hub 11 to take up the clearance 'L' between the teeth 20 and notches 30. Since the plates 41 and 42 are held fast in the hub flange 12, by the tab 47 and the friction damper flange plate 43 is held fast to the hub 11, and because spring 58 is stronger than the spring 59, the friction plate 52 is held stationary relative to the side plates 41 and 42 and the initial resistance to rotational movement is due to the friction damping generated by the spring 59 rubbing on either the side plate 41 or the side of the teeth 20, and also biasing the carrier plate 18 so that it also rubs on the side of the teeth 20, and by the first stage damping springs 48. In the initial phase only two springs 48 are compressed between the ends of the spring windows 55 and 54.

This is the stage A of the graph in Fig 10. After the lost motion clearance 'M' between the lugs 53 on the friction plate 52 and slots 45 on the hub 11 has been taken up (see Fig 9), the friction plate 52 is now held stationary relative to the flange plate 43, and the second pair of first stage damping springs 48 in the hub flange apertures 54A also begin to operate being compressed between the ends of the side plate windows 55 and the hub flange windows 54. Since the friction plate 52 is now held stationary, further movement of the facing carrier 14 is resisted by friction damping generated between the friction plate 52 and the side plate 42, and by all four first stage damping springs 48. This is the stage B in Fig 10. The friction hysteris during this stage B is higher than during the initial stage A.

This stage B continues until the lost-motion clearance 'L' between the hub flange 12, and the hub 11, is taken up (see Fig 1A) and should be for about 2 degree of relative rotation. This effectively ends the operation of the first stage damper.

When the lost motion movement between the teeth 20 on the hub 11 and the notches in the hub flange 12 has been taken up, further anti-clockwise movement causes the compression of the main torsion springs 15 between the end of the respective flange spring windows 16 and the opposed friction carried spring windows 17. As the carrier 14 rotates around the hub 11 and flange 12 some friction hysterises will be generated by the friction washers 26 under the bias of the spring washers 28 and 59.

The friction facing continues its relative anti-clockwise movement until the stop pins 21 abut the ends of the stop pins apertures as is well known in the trade. This is stage C. During this stage it can be seen that the main torsion springs 15 come into operation in stages.

If the load on the facings 24 is now relieved the facing carrier now moves clockwise and the torsion loads return back down the curve, allowing for the effects of hysteresis. For the sake of simplicity the hysteresis effect has been shown only on the drive side of the graph.

When the driven plate goes into the over-run mode, with the friction facing carrier now moving clockwise relative to the hub, the clearance between the lugs 53 on the friction plate 52 and slots 45 in the clockwise direction are only about 1 degree and therefore, initially the friction plate 52 is held stationary with the side plate 43 for only 1 degree, and the resistance to rotation during this phase is produced by a pair of first stage damping springs 48 in the flange plate apertures 54, and by the friction damping operating between the side plate 41 and the flange plate 43. This is stage X of the graph in Fig 10.

When the lugs 53 on the friction plate 52 are in abutment with the ends of the slots 45, the second pair of first stage springs 48 in the flange plate windows 54A also come into operation together with the friction damping operating between the friction plate 52 and the side plate 42. This is the stage Y is Fig 10.

This stage Y continues until the teeth 30 on the hub flange 12 abut the teeth 20 on the hub 11. Since the clearance 'L2' in the anticlockwise direction is less than in the clockwise direction, the main torsion damping springs 15 come into operation after only a total rotation movement of about 3 degrees in the over-run condition. Further clockwise movement is resisted by the main torsion damping springs 15 and previously described. This is stage Z of the graph.

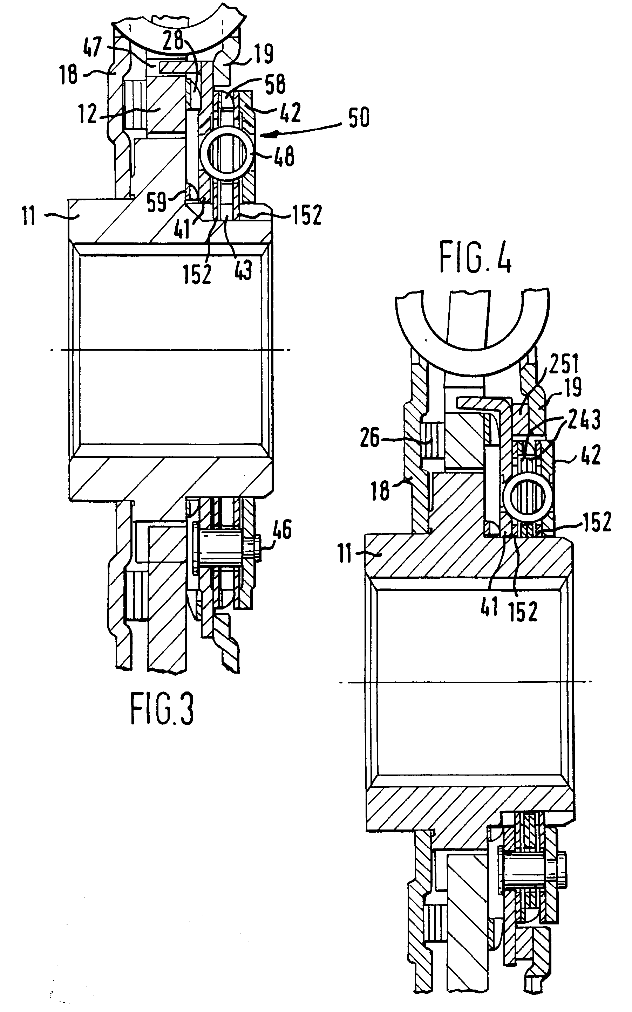

Now with reference to Fig 3 there is illustrated a section through a clutch driven plate which is a modification of the plate previously described and therefore the same reference numbers will be used as for the embodiment in Figs 1 and 2.

The principal modification in Fig 2 is that in the first stage damper means 50 there are a pair of friction plates 152 which are each located between a respective side plate 41, 42 and the flange plate 43. These friction plates 152 are substantially identical to the friction plate 52 of Fig 2, but are axially thinner. The spring washer 58 located radially outwardly of the flange plate 43 acts between the two friction plates 152 to bias them against the adjacent side plates. By using a pair of spaced friction plates 152 a high level of friction damping can be generated in the portions B and Y of the graph, the friction damping being between the side plates 41 and 42 and respective friction plate 152. The friction damping in the first stages A and X is generated by the spring washer 59 rubbing on the side plate 41 and the side of the teeth 20. The use of two friction plates 152 gives a more even load distribution across the first stage damper means.

In Fig 4 there is illustrated yet another embodiment of the invention in which the flange plate 43 is replaced by two flange plates 243 which are substantially identical and are axially seperable, and a spacer 251 is located between the retainer plate 19 and the side plate 41 of the first stage damper unit 50.

If it is desired to have only a single value of friction hysterises 'B' for the first stage damper unit 50, then the lugs 53 on the friction damping plates 52,152 can be made a tight fit with the splines 45 on the hub 11 so that there is no rotational movement between the friction plate and the hub 11.

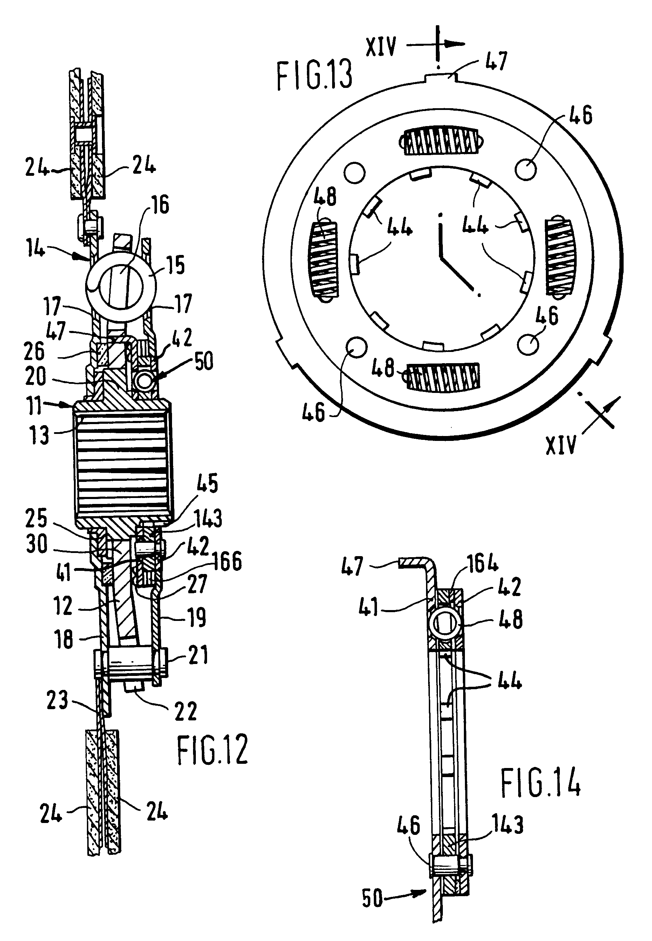

With reference now to Figs 11-20, there is illustrated yet another embodiment of the application in which the first stage torsion damping unit 50 has been adapted to fit more completely within the overall envelope of the driven plate. Those components which are identical with or substantially the same as the components described with reference to Figs 1 and 2, will have the same reference numerals.

In this embodiment, the carrier plate 18, and consequently the flange 12 are supported for rotational movement about the hub 11 by a flanged bush 25, preferably made of nylon, which is rotationally fast with the carrier plate 18.

The four low rate first stage damping springs 48 are housed in spring windows 54, 55, in a flange means 143 and side plates 41 and 42 respectively (see Figs 15, 16, 18, and 19). These low rate springs 48 provide a resistance to rotation of up to 1 da NM.

As before, the springs 48 may all have the same springs rating or not as is desired and can all be brought into operation simultaneously or may be phased in at different dwell angles, again as is desired. In this case at least two springs are under a pre load condition to return the hub 11 to an at-rest position relative to the hub flange under no load conditions ( no torque loads on the friction facings ) .

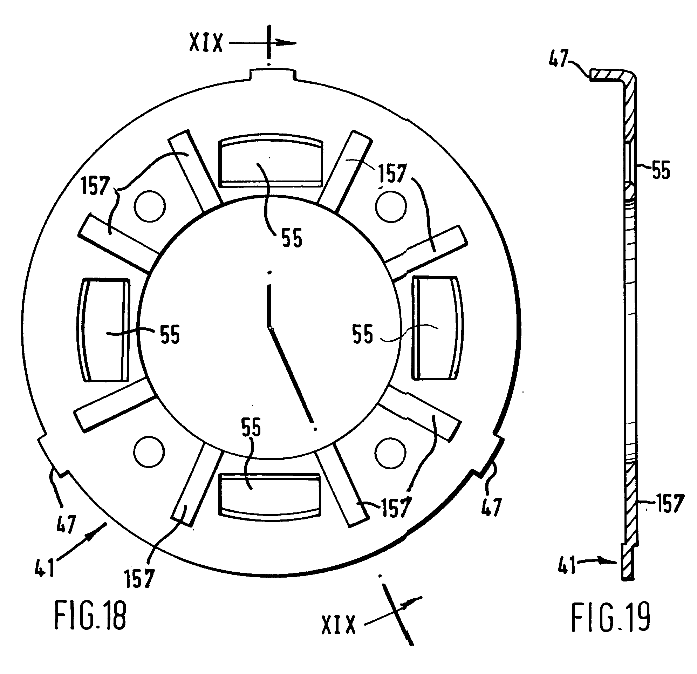

The side plate 41 which engages the hub flange 12 is shown in greater detail in Figs 18 and 19. The plate 41 on its surface adjacent the flange means 143 has eight raised surface portions in the form of radial ribs 157.

These radial ribs 157 are angularly spaced so as to engage raised co-operating surfaces on the adjacent surface of the flange means 143.

Now with reference to Figs 15 and 16 the flange means 143 is shown in Fig 15, viewing the side adjacent the side plate 42. There are four angularly spaced spring windows 54 and stop pin apertures 51 to allow for the limited angle rotation of the side plates 41, 42 relative to the flange means 143 against the resistance of the springs 48.

As viewed from its side adjacent the side plate 41, as shown in Fig 16, the flange means 143 has a surface comprising raised surface portions and low surface portions. The low portions are shown as shaded areas. The raised surface portions comprise a radially inner set of eight raised surface portion 162 which are angularly spaced to be in alignment with the eight raised ribs 157 on the plate 41 in the 'at rest' condition, and a set of eight radially outer raised surface portions 163 which are circumferentially offset from the inner raised portions 162, and are located outwardly of the spring windows 54, and stop pin apertures 51. The flange means 43 is formed from nylon, preferably nylon 66 and all these raised areas can be formed in a single moulding operation.

In the first stage damping unit 50 the plate 41 is biased towards the flange means 143 by a wavy washer 164 located between the flange means 143 and the side plate 42 at the outer peripheral margin thereof.

The pre-built first stage damper unit 50 is located in an annular space around the hub 11 between the hub flange 12 and the retainer plate 19. The damping unit side plate 42 is arranged to fit concentrically within the centre of the retainer plate 19 and is in axial alignment therewith.

When the pre-built unit 50 is placed into position, the spring washer 27 ,in this case a wavy washer, is first located on the hub flange 12 and the three tabs 47 on the plate 41 are each located in their respective slot in the radially inner edges of hub flange spring windows 16. Washers or spaces 166 are then placed over the plate 42 and are located between the side plate 41 and the retainer plate 19 and act to transmit the loading from the wavy washer spring 27 via the retainer plate 19 onto the friction washers 26.

The operation of the driven plate will now be explained and for the sake of simplicity the operation of the hysterises control for first stage damper unit 50 will be explained separately.

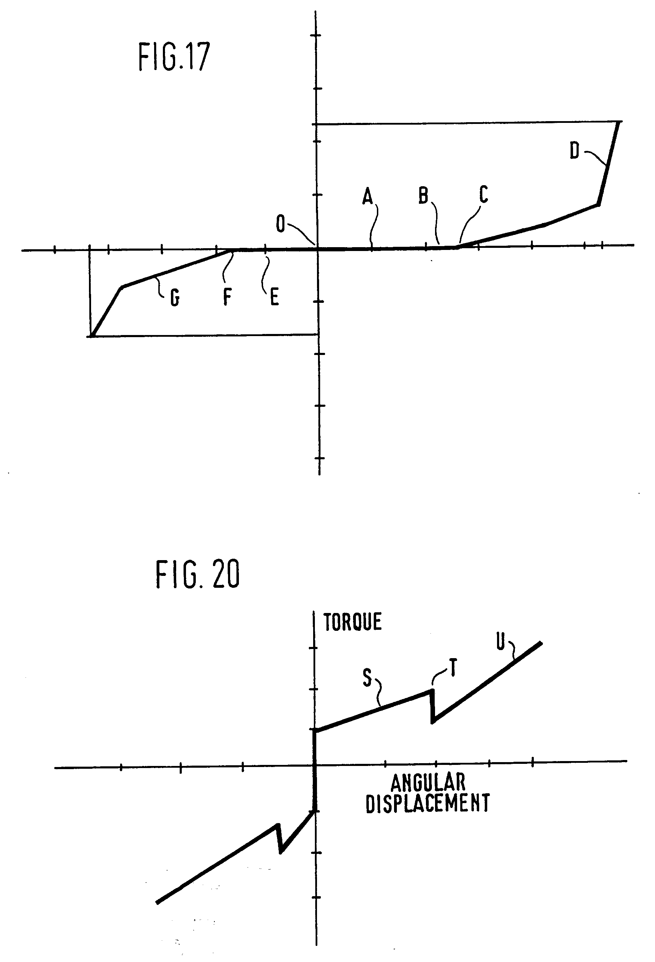

Now also with reference to Fig 11 and Fig 17 with the hub 11 held stationary and drive load applied to the friction facing 24, the facing carrier 14 is moved anti-clockwise as shown by arrow A in Fig. 1. Since carrier 14 and flange 12 are held rotationaly fast by the main torsion damping springs 15, the flange 12 will move initially relative to the hub 11 to take up the lost motion linkages between the teeth 20 and notches 30. Since the plates 41 and 42 are held fast in the flange 12, and the flange means 43 is held fast to the hub 11, the initial resistance to rotational movement is due to the friction damping generated by the bush 25 on the hub 11 and flange 12, and by the first stage damping unit 50. In the first period of rotation the springs 48 are compressed between the ends of the spring windows 54 and 55 and come on in phased stages A and B as the side plates 41 & 42 rotate relative to the flange means 143.

When the lost motion movement between the teeth 20 on the hub 11 and the notches in the flange has been taken up, point C on Fig. 17, further anit-clockwise movement causes the compression of the main torsion springs 15 between the end of the respective flange spring windows 16 and the opposed friction carried spring windows 17. The movement will contine until the stop pins 21 abut the ends of the hub flange apertures 22 and the torsion drive becomes solid, this shown in portion D of the graph.

As the carrier 14 rotates around the hub 11 and flange 12 some friction hysterises will be generated by the friction washers 26 and the spacers 166.

If the torque drive load is now decreased the facing carrier 14 rotates clockwise releiving the torque springs 15, which are still held in compression. The friction damping generated by the friction washer 26 and spaces 166 still operates, and a reverse movement down the graph takes place. As the driven plate returns to the at rest state the springs 15 become relaxed. However there is some pre-load on the first stage damper springs 48 so as to return the hub 11 to a predetermined position relative to the hub flange. The drive load passes through the origin of the graph as the driven plate goes into an overdrive or overun condition.

In the overdrive condition, the hub 11 is still held stationary and the friction facing continues its relative clockwise movement. Since the teeth 20 are slightly offset relative to the notches 30, the first period of rotation , during which the only resistance to rotation of the carrier 14 around the hub 11 is due to the first stage damping springs 48 and the friction damping caused by rotation of the bush 25 on the hub 11,is of a lesser angular period than for the drive condition . This is shown by the portion E of the graph.

When the teeth 20 abut the ends of the notches 20, at point F the flange 12 is now held stationary relative to the hub 11 and the main torsion spring 15 and friction washer 26 and spacers 166 come into operation. This is the portion G of the graph. This clockwise movement will continue until the stop pin 21 abut the ends of the hub flange apertures 22 and the torque drives goes solid.

If the overdrive torque load is now decreased, the facing carrier 14 moves anti-clockwise relative to the hub relieving the main torque springs 15 and then the first stage damping springs.

It will be appreciated that because the first stage spring damping has a so much smaller resistance load than the main torsion damping that the hysterises generated in first stage damper is insignificant in comparision with the torque capacity of the driven plate and therefore will not significantly alter the shape of the graph shown in Fig 17.

The generation of the friction hysterisis in the first stage damping unit 50 will now be explained.

As the plate 41 rotates relative to the flange means 143 the raised ribs 157 on the plate 41 each move across their respective radially inner raised portion 162 on the flange means 143 and which is shaped so that the ribs 157 encounter increasing resistance to the rotational movement. This may also result in some resilient distortion of the nylon flange means 143. This is position S of the graph in Fig. 20.

At the end of a predetermined relative angular movement, the load exerted by the ribs 157 is transfered from the inner raised portions 162, to the outer raised portions 163. At this moment of transfer at point T there is a slight fall off in hysterises but this builds up again as further rotation takes place. Since the friction contact is now radially further out than before the maximum value is increased due to effect of an increased moment of force. This is shown at 'U' in Fig. 20.

It is thought possible that the inherent elastic resilience in the flange means 143 also adds to the hysterises effect , as does the relative tangential movement of the ribs 157 across the raised surfaces 162 and 163.

## Claims

1. A method of manufacture of a friction clutch driven plate having a friction facing carrier (14) rotatably mounted on a hub (11) and having an initial resilient torsion damping means (48) operable over a first period of rotation of the carrier (14) around the hub (11), and a main torsion damping means (15) operable over a further second period of said rotation, characterised in that the initial torsion damping means (48) is assembled as part of a pre-built first stage damping unit (50) which forms a rotary coupling in its own right, and can be tested and adjusted prior to assembly of the driven plate.

2. A method of manufacture according to claim 1 wherein said clutch driven plate further comprises an annular hub flange (12) mounted on the hub and capable of limited angular movement about the hub, the friction facing carrier (14) being capable of limited angular movement relative to both the hub (11) and hub flange (12), the main torsion damping means (15) acting between the facing carrier (14) and the hub flange (12) to restrain relative rotational movement therebetween, and the initial damping means (48) acting between the hub flange (12) and the hub (11) to restrain angular movement therebetween during the first period of relative rotation of the carrier (14) relative to the hub (11), said friction facing carrier (14) comprising a carrier plate (18) arranged on one side of the hub flange (12) and a retainer plate located on the other side of the hub flange (12), said method being characterised by housing the first stage damping unit (50) in an annular space between the hub flange (12) and the retainer plate (19), and securing the damping unit (50) on the hub (11) by means of the retainer plate (19).

3. A method of manufacture as claimed in anyone of Claims 1 or 2, in which said first stage damping unit (50) comprises side plates (41,42) , flange means (43,243), and a friction plate (52, 152) , said method being characterised by providing each of said plates ( 41,42, 52, 152) and means ( 43,243) with an alignment hole (57) therein to facilitate correct assembly of the damping unit (50) .

4. A friction clutch driven plate manufactured by a method according to claim 1 and which comprises a hub (11) an annular hub flange (12) mounted on the hub and capable of limited angular movement about the hub (11) , and a friction facing carrier (14) also mounted on the hub (11) and capable of of limited angular movement relative to both the hub (11) and hub flange (12) , a main torsion damping means (15) acting between the facing carrier (14) and the hub flange (12) to restrain said relative movement therebetween , and an initial resilient torsion damping means (48) which acts between the hub flange (12) and the hub (11) to restrain angular movement therebetween during a first period of relative rotation of the carrier (14) around the hub (11), wherein the initial torsion damping means (48) is housed in the pre-built first stage damping unit (50) in which said initial damping means acts between a first coaxial annular means ( 41,42) adapted to engage rotationally fast with the hub flange (12) , and a second coaxial annular means ( 43,143,243) adapted to engage rotationally fast with the hub (11) said unit (50) forming the independant rotary coupling.

5. A friction clutch driven plate as claimed in claim 4, characterised in that the second coaxial annular means comprises a flange means (43, 143, 243) adapted to engage rotationally fast with the hub (11) , and the first coaxial annular means comprises a pair of side plates (41,42) located one on each side of the flange means (43) and being secured together by pins (46) that pass through apertures (51) in the flange means, said unit (50) including a friction damping device (52,152,143) operable during said first period of rotation .

6. A friction clutch driven plate as claimed in Claim 5, characterised in that the flange means (43,143,243 ) has teeth (44) on its inner periphery to engage splines (45) on the radially outer surface of the hub (11), and one of said annular side plates (41 ) has tab means (47) for engagement in a slot in hub flange (12).

7. A friction clutch driven plate as claimed in Claim 5 or Claim 6, characterised in that the initial damping means comprises four compression springs (48) housed in aligned spring windows (54, 55) in the flange means (43, 143, 243) and annular side plates (41, 42).

8. A friction clutch driven plate manufactured by a method as claimed in Claim 2 and which is as claimed in any one of Claims 5 to 7 in which the friction clutch facing carrier (14) comprises a carrier plate (18) arranged on one side of the hub flange (12) and a retainer plate (19) located on the other side of the hub flange (12), and characterised in that a side plate (42) of the first stage damping unit is concentric with the retainer plate (19).

9. A friction clutch driven plate as claimed in any one of Claims 5-8, characterised in that in the first stage damping unit (50), one of said side plates (41) on its face adjacent the flange means (143) has raised surface portions (157) that are contactable with co-operating raised surface portions (162) (163) on the adjacent surface of the flange means (143), and the flange means (143) is biased towards said one side plate (45) by a spring washer (164) acting between flange means (143) and the other side plate (42), such that rotational movement between the side plates (41, 42) and the flange means (143) will be resisted by frictional contact between said surface portions (157, 162, 163).

10. A friction clutch driven plate as claimed in Claim 9, characterised in that in the first stage damping unit (50) the flange means (143) is formed of flexible resilient material that allows the flange means to deform as the side plates (41, 42) move relative thereto as the raised portions (157) rub across the other cooperating surface portions (162, 163).

11. A friction clutch driven plate as claimed in Claim 10, characterised in that , the raised surface portions (162, 163) on the flange means (143) are arranged as radially inner raised portions (162) adjacent the inner periphery of the flange means, and radially outer raised portions (163) adjacent the outer periphery of the flange means and circumferentially offset from said radially inner raised portions (162), and the raised portions (157) on said one side plate (41) are in the form of angularly spaced radial ribs which are in alignment with the radially inner raised portion (162) in the at rest condition, and as the side plates (162, 163) rotate relative to the flange means (143) the friction contact between the radial ribs (157) and the raised portion (162, 163) changes from contact with the inner raised portions (162) to contact with the outer raised portions (163) to give two distinct stages of hysteresis.

12. A friction clutch driven plate according to any one of Claims 5-11, characterised in that the friction damping device comprises a friction plate (52,152) located between the flange means (43) and one of said side plates (42) and which has spring windows (56) therein and is capable of limited angular rotation relative to both the flange means (43) and the side plates (41, 42), said friction plate (52) being axially moveable relative to the flange means (43) and side plates (41, 42) and biased into frictional engagement with said one side plate (42) to generate friction damping during said initial phase.

13. A friction clutch driven plate as claimed in Claim 12, characterised in that the friction plate (52) (152) has apertures (49) therein that accommodate the pin (46) to allow for movement of the friction plate (52) relative to the side plates (41, 42), and lugs (53) on the inner periphery of the friction plate (52) loosely engage the splines (45) on the hub (11) to allow for relative movement between the friction plate (52) and the hub (11).

14. A friction clutch driven plate as claimed in Claim 11 or Claim 12, characterised in that a spring washer (58) acts between the other side plate (41) and the friction plate (52) to bias the friction plate (52) into frictional engagement with said one side plate (42), and said spring washer (58) is concentric with and radially outside of said flange means (43) (243).

15. A friction clutch driven plate as claimed in any one of Claims 5 to 8 and 12 to 14, characterised in that the flange means (243) comprises two flange plates (243) arranged side by side and which are rotationally fast with the huib (11) and which are axially moveable relative to each other.

16. A friction clutch driven plate as claimed in Claim 12 or Claim 13, or Claim 15 when dependant upon Claim 12 or Claim 13, characterised in that there are two friction plates (152) each of which is located between said flange means (43, 243) and a respective side plate (41, 42) and a spring washer (58) acts between the two friction plates (152) to bias each friction plate (152) into frictional engagement with the adjacent side plate (41 or 42).

## Patentansprüche

1. Verfahren zur Fertigung einer getriebenen Reibungskupplungsplatte, die einen Reibbelag-Träger (14) hat, der drehbar auf einer Nabe (11) angebracht ist und ein elastisches Anfangstorsionsdämpfungsmittel (48), das über einer ersten Rotationsperiode des Trägers (14) um die Nabe (11) wirksam werden kann, und ein Haupt-Torsionsdämpfungsmittel (15) hat, das über einer weiteren, zweiten Periode dieser Rotation wirksam werden kann, dadurch gekennzeichnet, daß das Anfangstorsionsdämpfungsinittel (48) als Teil einer vorgefertigten Erststufen-Dämpfungseinheit (50) montiert wird, die in sich eine Drehkupplung bildet und vor der Montage an der getriebenen Kupplungsplatte geprüft und eingestellt werden kann.

2. Fertigungsverfahren nach Anspruch 1, bei welchem die getriebene Kupplungsplatte außerdem einen ringförmigen Nabenflansch (12) aufweist, der auf der Nabe angebracht ist und eine begrenzte Winkelbewegung um die Nabe ausführen kann, wobei der Reibbelag-Träger (14) in der Lage ist, eine begrenzte Winkelbewegung im Verhältnis sowohl zur Nabe (11) als auch zum Nabenflansch (12) auszuführen, das Haupt-Torsionsdämpfungsmittel (15) zwischen dem Belagträger (14) und dem Nabenflansch (12) wirksam ist, um die relative Drehbewegung zwischen diesen zu beschränken, und das Anfangsdämpfungsmittel (48) zwischen dem Nabenflansch (12) und der Nabe (11) wirksam ist, um die Winkelbewegung zwischen diesen während einer ersten Periode der relativen Rotation des Trägers (14) im Verhältnis zur Nabe (11) zu beschränken, wobei der genannte Reibbelag-Träger (14) eine Trägerplatte (18), die auf einer Seite des Nabenflanschs (12) angeordnet ist, und eine Halteplatte (19), die sich auf der anderen Seite des Nabenflanschs (12) befindet, hat, wobei dieses Verfahren dadurch gekennzeichnet ist, daß die Erststufen-Dämpfungseinheit (50) in einem ringförmigen Raum zwischen dem Nabenflansch (12) und der Halteplatte (19) untergebracht ist und die Dämpfungseinheit (50) auf der Nabe (11) mittels der Halteplatte (19) befestigt wird.

3. Fertigungsverfahren nach einem der Ansprüche 1 oder 2, bei welchem die Erststufen-Dämpfungseinheit (50) Seitenplatten (41, 42), ein Flanschelement (43, 243) und eine Reibplatte (52, 152) aufweist, wobei dieses Verfahren dadurch gekennzeichnet ist, daß jede der Platten (41, 42, 52, 152) und jedes der Elemente (43, 243) mit einem Paßloch (57) versehen ist, um die korrekte Montage der Dämpfungseinheit (50) zu erleichtern.

4. Getriebene Reibungskupplungsplatte, die nach einem Verfahren gemäß Anspruch 1 hergestellt wird und eine Nabe (11), einen ringförmigen Nabenflansch (12), der auf der Nabe angebracht ist und eine begrenzte Winkelbewegung um die Nabe (11) ausführen kann, und einen Reibbelag-Träger (14), der ebenfalls auf der Nabe (11) angebracht ist und eine begrenzte Winkelbewegung im Verhältnis sowohl zu der Nabe (11) als auch zu dem Nabenflansch (12) ausführen kann, ein Haupt-Torsionsdämpfungsmittel (15), das zwischen dem Belagträger (14) und dem Nabenflansch (12) wirksam ist, um die genannte relative Bewegung zwischen diesen zu beschränken, und ein elastisches Anfangstorsionsdämpfungsmittel (48) aufweist, das zwischen dem Nabenflansch (12) und der Nabe (11) wirksam wird, um die Winkelbewegung zwischen diesen während einer ersten Periode der relativen Rotation des Trägers (14) um die Nabe (11) zu beschränken, bei welcher das Anfangstorsionsdämpfungsmittel (48) in der vorgefertigten Erststufen-Dämpfungseinheit (50) untergebracht ist, in der das Anfangsdämpfungsmittel zwischen einem ersten koaxialen Ringelement (41, 42), das rotationsfest mit dem Nabenflansch (12) in Eingriff kommen kann, und einem zweiten koaxialen Ringelement (43, 143, 243), das rotationsfest mit der Nabe (11) in Eingriff kommen kann, wirksam wird, wobei diese Einheit (50) eine selbständige Drehkupplung bildet.

5. Getriebene Reibungskupplungsplatte nach Anspruch 4, dadurch gekennzeichnet, daß das zweite koaxiale Ringelement ein Flanschelement (43, 143, 243) umfaßt, das rotationsfest mit der Nabe (11) in Eingriff kommen kann, und das erste koaxiale Ringelement ein Paar Seitenplatten (41, 42) umfaßt, die jeweils eine auf jeder Seite des Flanschelements (43) angeordnet sind und miteinander durch Stifte (46) befestigt werden, die durch Öffnungen (51) in dem Flanschelement führen, wobei diese Einheit (50) ein Reibungsdämpfungselement (52, 152, 143) einschließt, das während der ersten Rotationsperiode wirksam wird.

6. Getriebene Reibungskupplungsplatte nach Anspruch 5, dadurch gekennzeichnet, daß das Flanschelement (43, 143, 243) auf seinem inneren Umfang Zähne (44) hat, die mit Keilnuten (45) auf der in Radialrichtung äußeren Fläche der Nabe (11) in Eingriff kommen, und eine der ringförmigen Seitenplatten (41) Vorsprünge (47) zum Eingreifen in einen Schlitz im Nabenflansch (12) hat.

7. Getriebene Reibungskupplungsplatte nach Anspruch 5 oder Anspruch 6, dadurch gekennzeichnet, daß das Anfangsdämpfungsmittel vier Druckfedern (48) aufweist, die in ausgerichteten Federfenstern (54, 55) im Flanschelement (43, 143, 243) und in den ringförmigen Seitenplatten (41, 42) untergebracht sind.

8. Getriebene Reibungskupplungsplatte, die nach einem Verfahren gemäß Anspruch 2 hergestellt wird und nach einem der Ansprüche 5 bis 7, bei welcher der Reibungskupplungsbelag-Träger (14) eine Trägerplatte (18), die sich auf einer Seite des Nabenflanschs (12) befindet, und eine Halteplatte (19) aufweist, die sich auf der anderen Seite des Nabenflanschs (12) befindet, und die dadurch gekennzeichnet ist, daß eine Seitenplatte (42) der Erststufen-Dämpfungeinheit mit der Halteplatte (19) konzentrisch ist.

9. Getriebene Reibungskupplungsplatte nach einem der Ansprüche 5 bis 8, dadurch gekennzeichnet, daß in der Erststufen-Dämpfungseinheit (50) eine der Seitenplatten (41) auf der an das Flanschelement (143) angrenzenden Fläche hochstehende Flächenabschnitte (157) hat, die mit damit zusammenwirkenden hochstehenden Flächenabschnitten (162, 163) auf der angrenzenden Oberfläche des Flanschelements (143) in Kontakt kommen können, und daß das Flanschelement (143) zu der genannten einen der Seitenplatten (41) hin durch eine Tellerfeder (164) vorgespannt ist, die zwischen dem Flanschelement (143) und der anderen Seitenplatte (42) wirksam ist, so daß der Drehbewegung zwischen den Seitenplatten (41, 42) und dem Flanschelement (143) der Reibkontakt zwischen den genannten Flächenabschnitten (157, 162, 163) entgegenwirkt.

10. Getriebene Reibungskupplungsplatte nach Anspruch 9, dadurch gekennzeichnet, daß in der Erststufen-Dämpfungseinheit (50) das Flanschelement (143) aus einem flexiblen, elastischen Material hergestellt wird, das die Verformung des Flanschelements erlaubt, wenn sich die Seitenplatten (41, 42) im Verhältnis zu diesem bewegen, wenn die hochstehenden Abschnitte (157) auf den anderen, damit zusammenwirkenden Flächenabschnitten (162, 163) reiben.

11. Getriebene Reibungskupplungsplatte nach Anspruch 10, dadurch gekennzeichnet, daß die hochstehenden Flächenabschnitte (162, 163) auf dem Flanschelement (143) als in Radialrichtung innere hochstehende Abschnitte (162) am inneren Umfang des Flanschelement und als in Radialrichtung äußere hochstehende Abschnitte (163) am äußeren Umfang des Flanschelements angeordnet und letztere gegenüber den in Radialrichtung inneren hochstehenden Abschnitten (162) über den Umfang versetzt angeordnet sind und daß die hochstehenden Abschnitte (157) auf der genannten einen Seitenplatte (41) die Form von winklig im Abstand zueinander angeordneten Radialrippen haben, die im Ruhezustand mit den in Radialrichtung inneren hochstehenden Abschnitten (162) ausgerichtet sind, und daß sich der Reibkontakt zwischen den Radialrippen (157) und den hochstehenden Abschnitten (162, 163), wenn sich die Seitenplatten (162, 163) im Verhältnis zum Flanschelement (143) drehen, vom Kontakt mit den inneren hochstehenden Abschnitten (162) in den Kontakt mit den äußeren hochstehenden Abschnitten (163) ändert, um zwei unterschiedliche Hysterese-Stufen zu ergeben.

12. Getriebene Reibungskupplungsplatte nach einem der Ansprüche 5 bis 11, dadurch gekennzeichnet, daß das Reibungsdämpfungselement eine Reibplatte (52, 152) aufweist, die sich zwischen dem Flanschelement (43) und einer der genannten Seitenplatten (42) befindet und in der Federfenster (56) angeordnet sind und die in der Lage ist, eine begrenzte Winkelrotation im Verhältnis sowohl zum Flanschelement (43) als auch zu den Seitenplatten (41, 42) auszuführen, wobei die Reibplatte (52) in Axialrichtung im Verhältnis zum Flanschelement (43) und zu den Seitenplatten (41, 42) bewegt werden kann und im Reibungseingriff mit der genannten einen Seitenplatte (42) vorgespannt ist, um während der Anfangsphase eine Reibungsdämpfung zu erzeugen.

13. Getriebe Reibungskupplungsplatte nach Anspruch 12, dadurch gekennzeichnet, daß die Reibplatte (52, 152) Öffnungen (49) hat, die den Stift (46) aufnehmen, um die Bewegung der Reibplatte (52) im Verhältnis zu den Seitenplatten (41, 42) zu ermöglichen, und Ansätze (53) auf dem inneren Umfang der Reibplatte (52) lose in die Keilnuten (45) auf der Nabe (11) eingreifen, um die relative Bewegung zwischen der Reibplatte (52) und der Nabe (11) zu ermöglichen.

14. Getriebene Reibungskupplungsplatte nach Anspruch 11 oder Anspruch 12, dadurch gekennzeichnet, daß zwischen der anderen Seitenplatte (41) und der Reibplatte (52) eine Tellerfeder (58) wirksam wird, um die Reibplatte (52) in Reibungseingriff mit der genannten einen Seitenplatte (42) vorzuspannen, und die Tellerfeder (58) konzentrisch mit dem Flanschelement (43, 243) und in Radialrichtung außerhalb desselben angeordnet ist.

15. Getriebene Reibungskupplungsplatte nach einem der Ansprüche 5 bis 8 und 12 bis 14, dadurch gekennzeichnet, daß das Flanschelement (243) zwei Flanschplatten (243) aufweist, die nebeneinander angeordnet und rotationsfest mit der Nabe (11) verbunden sind und die in Axialrichtung im Verhältnis zueinander bewegt werden können.

16. Getriebene Reibungskupplungsplatte nach Anspruch 12 oder Anspruch 13 oder nach Anspruch 15 in Abhängigkeit von Anspruch 12 oder 13, dadurch gekennzeichnet, daß zwei Reibplatten (152) vorhanden sind, die jeweils zwischen dem Flanschelement (43, 243) und einer entsprechenden Seitenplatte (41, 42) angeordnet sind, und zwischen den beiden Reibplatten (152) eine Tellerfeder (58) wirksam ist, um jede der Reibplatten (152) zum Reibungseingriff mit der angrenzenden Seitenplatte (41 oder 42) vorzuspannen.

## Revendications

1. Un procédé de fabrication d'un disque d'embrayage à friction possédant un support de la garniture de friction (14) monté par rotation sur un moyeu (11) et comportant un moyen élastique amortisseur de torsion initial (14), pouvant être actionné au cours d'une première période de rotation du support (14) autour du moyeu (11), ainsi qu'un moyen amortisseur de torsion principal (15) pouvant être actionné au cours d'une deuxième période ultérieure de ladite rotation, caractérisé en ce que le moyen amortisseur de torsion initial (48) est assemblé sous forme d'une partie d'une unité d'amortissement de première phase préconstruite (50) constituant un accouplement rotatif autonome, et pouvant être contrôlée et ajustée avant l'assemblage du disque d'embrayage

2. Un procédé de fabrication selon la revendication 1, dans lequel ledit disque d'embrayage comprend en outre une flasque de moyeu annulaire (12) montée sur le moyeu et pouvant effectuer un mouvement angulaire limité autour du moyeu, le support de la garniture de friction (14) pouvant effectuer un mouvement angulaire limité par rapport au moyeu (11) et à la flasque du moyeu (12), le moyen amortisseur de torsion principal (15) agissant entre le support de la garniture de friction (14) et la flasque du moyeu (12) pour limiter le mouvement de rotation relatif entre eux, et le moyen amortisseur initial (48) agissant entre la flasque du moyeu (12) et le moyeu (11) pour limiter le mouvement angulaire entre eux au cours de la première période de rotation relative du support (14) par rapport au moyeu (11), ledit support de la garniture de friction (14) comprenant une plaque de support (18) agencée sur un côté de la flasque du moyeu (12) et une plaque de retenue agencée sur l'autre côté de la flasque du moyeu (12), ledit procédé étant caractérisé en ce que l'unité d'amortissement de première phase (50) est logée dans un espace annulaire entre la flasque du moyeu (12) et la plaque de retenue (19), et en ce que l'unité d'amortissement (50) est fixée sur le moyeu (11) par l'intermédiaire de la plaque de retenue (19).

3. Un procédé de fabrication selon l'une quelconque des revendications 1 ou 2, dans lequel ladite unité d'amortissement de première phase (50) comprend des plaques latérales (41, 42), un moyen de flasque (43, 243) et une plaque de friction (52, 152), ledit procédé étant caractérisé en ce que chacune des dites plaques (41, 42, 52, 152) et moyens (43, 243) comporte un trou d'alignement (57) pour faciliter l'assemblage correct de l'unité d'amortissement (50).

4. Un disque d'embrayage à friction fabriqué selon un procédé conforme à la revendication 1, comprenant un moyeu (11), une flasque de moyeu annulaire (12), montée sur le moyeu et pouvant effectuer un mouvement angulaire limité autour du moyeu (11), ainsi qu'un support de la garniture de friction (14), monté également sur le moyeu (11) et pouvant effectuer un mouvement angulaire limité par rapport au moyeu (11) et à la flasque du moyeu (12), un moyen amortisseur de torsion principal (15) agissant entre le support de la garniture de friction (14) et la flasque du moyeu (12) pour limiter ledit mouvement relatif entre eux, ainsi qu'un moyen amortisseur élastique de torsion initial (48), agissant entre la flasque du moyeu (12) et le moyeu (11) pour limiter le mouvement angulaire entre eux au cours d'une première période de rotation relative du support (14) autour du moyeu (11), le moyen amortisseur de torsion initial (48) étant logé dans l'unité d'amortissement de première phase préconstruite (50), dans laquelle ledit moyen amortisseur initial agit entre un premier moyen annulaire coaxial (41, 42) pouvant s'engager fermement par rotation dans la flasque du moyeu (12), et un deuxième moyen annulaire coaxial (43, 143, 243), pouvant s'engager fermement par rotation dans le moyeu (11), ladite unité (50) formant l'accouplement rotatif indépendant.

5. Un disque d'embrayage à friction selon la revendication 4, caractérisé en ce que le deuxième moyen annulaire coaxial comprend un moyen de flasque (43, 143, 243) pouvant s'engager fermement par rotation dans le moyeu (11), et en ce que le premier moyen annulaire coaxial comprend une paire de plaques latérales (41, 42) agencées chacune sur chaque côté du moyen de flasque (43) et étant assemblées par l'intermédiaire de broches (46) traversant des ouvertures (51) dans le moyen de flasque, ladite unité (50) englobant un dispositif amortisseur de friction (52, 152, 143) pouvant être actionné au cours de ladite première période de rotation.

6. Un disque d'embrayage à friction selon la revendication 5, caractérisé en ce que le moyen de flasque (43, 143, 243) possède des dents (44) sur sa périphérie interne, destinées à s'engager dans les cannelures (45) sur la surface radialement externe du moyeu (11), l'une des dites plaques latérales annulaires (41) comportant un moyen de patte (47) destiné à s'engager dans une fente dans la flasque du moyeu (12).

7. Un disque d'embrayage à friction selon les revendications 5 ou 6, caractérisé en ce que le moyen amortisseur initial comprend quatre ressorts de compression (48), logés dans des fenêtres de ressort alignées (54, 55) dans le moyen de flasque (43, 143, 243) et dans les plaques latérales annulaires (41, 42).

8. Un disque d'embrayage à friction fabriqué par un procédé selon la revendication 2, conforme à l'une quelconque des revendications 5 à 7, dans lequel le support de la garniture de l'embrayage à friction (14) comprend une plaque de support (18) agencée sur un côté de la flasque du moyeu (12) et une plaque de retenue (19) agencée sur l'autre côté de la flasque du moyeu (12), et caractérisé en ce qu'une plaque latérale (42) de l'unité d'amortissement de première phase est conçentrique par rapport à la plaque de retenue (19).

9. Un disque d'embrayage à friction selon l'une quelconque des revendications 5 à 8, caractérisé en ce que dans l'unité d' amortissement de première phase (50), une des dites plaques latérales (41) comporte sur sa face adjacente au moyen de flasque (143) des parties de surface surélevées (157), pouvant entrer en contact avec des parties de surface surélevées de coopération (162) (163) sur la surface adjacente du moyen de flasque (143), et en ce que le moyen de flasque (143) est pressé en direction de ladite une plaque latérale (41) par une rondelle élastique (164), agissant entre le moyen de flasque (143) et l'autre plaque latérale (42), de sorte que le mouvement de rotation entre les plaques latérales (41, 42) et le moyen de flasque (143) sera exposé à la résistance du contact de frottement entre lesdites parties de surface (157, 162, 163).

10. Un disque d'embrayage à friction selon la revendication 9, caractérisé en ce que dans l'unité d'amortissement de première phase (50), le moyen de flasque (143) est composé d'un matériau résilient flexible permettant la déformation du moyen de flasque lors du mouvement relatif correspondant des plaques latérales (41, 42), les parties surélevées (157) exerçant un frottement sur les autres parties de surface de coopération (162, 163).

11. Un disque d'embrayage à friction selon la revendication 10, caractérisé en ce que les parties de surface surélevées (162, 163) sur le moyen de flasque (143) sont agencées sous forme de parties surélevées radialement internes (162) adjacentes à la périphérie interne du moyen de flasque, et de parties surélevées radialement externes (163), adjacentes à la périphérie externe du moyen de flasque et décalées circonférentiellement par rapport aux dites parties surélevées radialement internes (162), les parties surélevées (157) sur ladite une plaque latérale (41) ayant la forme de nervures radiales à espacement angulaire, alignées avec la partie surélevée radialement interne (162) dans la position de repos, et en ce que, lors de la rotation relative des plaques latérales (162, 163) par rapport au moyen de flasque (143), le contact de frottement entre les nervures radiales (157) et la partie surélevée (162, 163) ne s'exerce plus sur les parties surélevées internes (162), mais sur les parties surélevées externes (163) pour donner deux phases différentes d'hystérésis.

12. Un disque d'embrayage à friction selon l'une quelconque des revendications 5 à 11, caractérisé en ce que le dispositif amortisseur de friction comprend une plaque de friction (52, 152), agencée entre le moyen de flasque (43) et une des dites plaques latérales (42), en ce qu'il comporte des fenêtres de ressort (56) et qu'il peut effectuer un mouvement de rotation angulaire limité par rapport au moyen de flasque (43) et aux plaques latérales (41, 42), ladite plaque de friction (52) pouvant se déplacer axialement par rapport au moyen de flasque (43) et aux plaques latérales (41, 42) et étant pressé pour s'engager par friction dans l'une des dites plaques latérales (42) pour engendrer un amortissement de friction au cours de ladite phase initiale.

13. Un disque d'embrayage à friction selon la revendication 12, caractérisé en ce que la plaque de friction (52) (152) comporte des ouvertures (49) pour recevoir la broche (46) et permettre le mouvement de la plaque de friction (52) par rapport aux plaques latérales (41, 42), des ergots (53) sur la périphérie interne du disque de friction (52) s'engageant librement dans les cannelures (45) sur le moyeu (11) pour permettre le mouvement relatif entre la plaque de friction (52) et le moyeu (11).

14. Un disque d'embrayage à friction selon les revendications 11 ou 12, caractérisé en ce qu'une rondelle élastique (58) agit entre l'autre plaque latérale (41) et la plaque de friction (52) pour presser la plaque de friction (52) en vue de son engagement par friction dans l'une des dites plaques latérales (42), ladite rondelle élastique (58) étant concentrique par rapport au dit moyen de flasque (43) (243) et agencé radialement à l'extérieur de celui-ci.

15. Un disque d'embrayage à friction selon l'une quelconque des revendications 5 à 8 et 12 à 14, caractérisé en ce que le moyen de flasque (243) comprend deux plaques de flasque (243) agencées côte à côte, fixées par rotation au moyeu (11) et pouvant se déplacer axialement l'une par rapport à l'autre.

16. Un disque d'embrayage à friction selon les revendications 12 ou 13, ou selon la revendication 15, dans la mesure où elle dépend de la revendication 12 ou de la revendication 13, caractérisé en ce qu'il y a deux plaques de friction (152), dont chacune est agencée entre ledit moyen de flasque (43, 243) et une plaque latéral respective (41, 42), une rondelle élastique (58) agissant entre les deux plaques de friction (152) pour presser chaque plaque de friction (152), en vue de son engagement par friction dans la plaque latérale adjacente (41 ou 42).
